# EUROPEAN PATENT SPECIFICATION

(11) **EP 4 599 556 B1**
(45) Date of publication and mention of the grant of the patent: **09.09.2026**
(21) Application number: 23821829.1
(22) Date of filing: 09.11.2023
(51) Int. Cl.: H04L 9/40, H04L 47/24, H04L 69/22, H04W 12/03, H04W 28/02, H04W 76/12

(54) **QUALITY OF SERVICE (QOS) DIFFERENTIATION FOR INTERNET PROTOCOL (IP) ACCESS IN A WIRELESS COMMUNICATION SYSTEM**
DIENSTGÜTEDIFFERENZIERUNG FÜR INTERNETPROTOKOLLZUGANG IN EINEM DRAHTLOSEN KOMMUNIKATIONSSYSTEM
DIFFÉRENCIATION DE QUALITÉ DE SERVICE (QOS) POUR UN ACCÈS À UN PROTOCOLE INTERNET (IP) DANS UN SYSTÈME DE COMMUNICATION SANS FIL

(30) Priority: 11.11.2022 US 202263383474 P
(43) Date of publication of application: 13.08.2025
(73) Proprietor: Google LLC, Mountain View, CA 94043 (US)
(72) Inventor: HUANG FU, Chien-Chun, Taipei, 105 (TW); LEE, Po-Chun, Keelung City, 2004 (TW)
(74) Representative: Marks & Clerk GST
(86) International application number: PCT/US2023/079212
(87) International publication number: WO 2024/102897

(56) References cited:
- WO-A1-2022/204042
- WO-A1-2022/207089
- US-A1- 2016 338 073
- US-A1- 2021 400 538

## Description

### TECHNICAL FIELD

This disclosure relates generally to wireless communications and a mechanism for communications with different quality of service between a user equipment and a 5G core via a non-Third Generation Partnership Project (3GPP) access network.

### DESCRIPTION OF THE RELATED TECHNOLOGY

A user equipment (UE) may access a Third Generation Partnership Project (3GPP) network via a non-3GPP access network. Non-3GPP access also may be an Internet Protocol (IP) access. The UE and a fifth-generation (5G) core (5GC) can establish a protocol data unit (PDU) session via the non-3GPP network. As part of establishing the PDU session, the UE may establish one or more Internet Protocol security (IPsec) security associations (SAs) (aka an IPsec tunnels) using a non-3GPP access function (such as a non-3GPP Interworking Function (N3IWF)). When accessing the 5GC via the non-3GPP network (e.g., an IP access network), the UE may transmit datagrams using such an IPsec SA (IPsec tunnel). The UE or the N3IWF can send PDUs for the PDU session using the IPsec tunnel. PDUs may be encapsulated in a generic routing encapsulation (GRE) packet. The GRE packet may be included in a payload of an IPsec packet, the IPsec packet also having an outside IP header and IPsec header. Thus, a datagram includes outer IP header, IPsec header, and a payload including the GRE packet encapsulating the PDU packet. The outer IP header includes a differentiated services code point (DSCP) value indicating a QoS for the datagram. In some instances, the PDU session supports two or more qualities of service. For example, the PDUs may include video data having a first quality of service (QoS) and voice data having a second QoS. Conventionally, the UE and the N3IWF establish separate IPsec tunnels for different QoSs, which wastes resources due to signaling overhead.

US2016338073A1 describes LTE-WLAN aggregation (LWA) at the radio access network level. US2021400538A1 describes a method for data transmission applied to a first communications device including obtaining first information, and determining, based on the first information, a differentiated services code point DSCP corresponding to an Internet protocol security tunnel IPsec tunnel, where the first information includes at least one of the following: quality of service QoS information of a second network tunnel, data type information, a mapping relationship between differentiated service code points DSCPs and QoS information, a first QoS information requirement, and a first DSCP. WO2022204042A1 describes a first core network node of a second network receives a first identifier associated with a first session between a wireless device and a first network, the first core network node determining, based on the first identifier, a second session of the wireless device in the second network. The first core network node sends, to a second core network node of the second network, the first identifier. WO2022207089A1 describes apparatuses, methods, and systems for modifying a first data connection during the establishment of a second data connection.

### SUMMARY

The invention is defined by the independent claims.

The systems, methods, and devices of this disclosure each have several innovative aspects, no single one of which is solely responsible for the desirable attributes disclosed herein.

One innovative aspect of the subject matter described in this disclosure can be implemented in a method for generating datagrams of a protocol data unit (PDU) session between a user equipment (UE) and a fifth-generation core network (5GC). The method includes establishing an Internet Protocol security (IPsec) tunnel over a non-third generation partnership project (non-3GPP) access network. The method includes generating a first datagram to convey a first encrypted PDU. The first datagram includes a first outer Internet Protocol (IP) header with a first differentiated services code point (DSCP) value matching a second DSCP value corresponding to the first encrypted PDU. The method includes generating a second datagram to convey a second encrypted PDU. The second datagram including a second outer IP header with a third DSCP value matching a fourth DSCP value corresponding to the second encrypted PDU, the third DSCP value being different from the first DSCP value. The method includes transmitting the first datagram and the second datagram via the IPsec tunnel in the non-3GPP access network.

Another innovative aspect of the subject matter described in this disclosure can be implemented in a device (or apparatus) including a processor and a radio communication interface configured to implement the above-referenced method.

Another innovative aspect of the subject matter described in this disclosure can be implemented in a network node including a processor and a modem configured to implement the above-referenced method.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

**Figure 1** shows a pictorial diagram illustrating possible connections of a UE to a 5GC via different types of access networks in a wireless communication system.
**Figure 2** is a pictural diagram illustrating a datagram Structure.
**Figure 3** is a pictorial diagram illustrating transmittal of datagrams with different qualities of service (QoSs) via an Internet Protocol security (IPsec) tunnel between a user equipment (UE) and a non-3GPP Interworking Function (N3IWF).
**Figure 4A** is a signaling diagram illustrating messaging and operations for establishing a single IPsec child security association (SA) between an N3IWF and a UE.
**Figure 4B** is a signaling diagram illustrating messaging and operations for establishing multiple IPsec child SAs between an N3IWF and a UE.
**Figure 5** is a flowchart illustrating operations for a UE or N3IWF transmitting datagrams using a single IPsec tunnel or multiple IPsec tunnels.
**Figure 6** is a pictorial diagram illustrating criteria by which a UE or N3IWF can decide whether to utilize a single IPsec tunnel or multiple IPsec tunnels.
**Figure 7** shows a flowchart of an example process for quality of service (QoS) differentiation for non- 3GPP access.
**Figure 8** is a flowchart illustrating operations for a transmitter transmitting datagrams using a single IPsec tunnel or multiple IPsec tunnels.
**Figure 9** shows a block diagram of an example device that supports QoS differentiation for non- 3GPP access.

Like reference numbers and designations in the various drawings indicate like elements.

### DETAILED DESCRIPTION

The following description is directed to certain implementations for the purpose of describing the innovative aspects of this disclosure. However, a person having ordinary skill in the art will readily recognize that the teachings herein can be applied in a multitude of different ways. Some of the examples in this disclosure are based on wireless communication according to the 3^{rd} Generation Partnership Project (3GPP) wireless standards, such as the 4G LTE and 5G NR standards. However, the described implementations can be implemented in any device, system, or network that is capable of transmitting and receiving radio frequency signals according to any of the wireless communication standards, including any of the Institute of Electrical and Electronics Engineers (IEEE) 802.11, 802.15, or 802.16 wireless standards, or other known signals that are used to communicate within a wireless, cellular, or internet of things (IOT) network, such as a system utilizing 3G, 4G, 5G, WiFi or future radio technology.

This disclosure provides systems, methods, and apparatuses for quality of service (QoS) differentiation for Internet Protocol (IP) access in a wireless communication system. A user equipment (UE) can access a 5G network over a 3GPP access network or a non-3GPP access network. The UE and a 5G core (5GC) can establish a protocol data unit (PDU) session. The UE and a network node can establish one or more IP security (IPsec) security associations (SAs) to communicate datagrams for the PDU session over the non-3GPP access network. An IPsec SA may be an IPsec tunnel. For brevity, this description describes untrusted non-3GPP access in which the UE establishes an IPsec tunnel using a N3IWF that serves as a gateway between the untrusted non-3GPP access and the 5GC. The UE may also communicate with the 5GC via a trusted non-3GPP access network in which the UE establishes an IPsec tunnel to a trusted non-3GPP gateway function (TNGF) that serves as a gateway between the trusted non-3GPP access and the 5GC.

For untrusted non-3GPP access, the N3IWF is the access network node that provides QoS signaling to support QoS differentiation and mapping of QoS flows to non-3GPP access resources. For untrusted non-3GPP access, unauthorized users can access non-3GPP access points and QoS is not guaranteed. For trusted non-3GPP access, the TNGF is the access network node that provides QoS signaling to support QoS differentiation and mapping of QoS flows to non-3GPP access resources. For a trusted non-3GPP access network, only authorized users can access non-3GPP access points and QoS might be guaranteed. A trusted non-3GPP access network is connected to the 5GC via a trusted non-3GPP gateway function (TNGF).

According to some embodiments, the UE and the network generate datagrams for communicating over an untrusted non-3GPP network having different qualities of service via a single IPsec tunnel. For example, the UE can transmit one datagram having a particular quality of service (QoS) over the IPsec tunnel and another datagram having a different QoS over the same IPsec tunnel. By using a single IPsec tunnel for multiple datagrams with plural different QoSs, the UE avoids inefficiencies related to establishing separate IPsec tunnels for each QoS.

In some implementations, the UE and/or the N3IWF specify a particular QoS for each datagram in the IPsec tunnel. To achieve the specified QoS, the UE and/or the N3IWF insert a copy of a PDU's differentiated services code point (DSCP) value into the datagram's outer IP header. For example, the UE may transmit two PDUs having different QoSs via the same IPsec tunnel. To represent different qualities of service in a PDU session, each PDU will have a different DSCP. The UE creates two datagrams, where each datagram includes a different DSCP in its outer IP header. The UE customizes the QoS for the first datagram by copying the first PDU's DSCP into the first datagram's outer IP header. The UE customizes the QoS for the second datagram by copying the second PDU's DSCP into the second datagram's outer IP header. The UE can transmit the datagrams over IPsec tunnel to the non-3GPP access network. The untrusted non-3GPP access network can discover a distinct QoS for each datagram by evaluating each datagram's outer IP header.

Particular implementations of the subject matter described in this disclosure can be implemented to realize one or more of the following potential advantages. A UE can more easily connect to multiple services of a 3GPP network via a non-3GPP access network. In some implementations, the UE and non-3GPP access network establish a single IPsec tunnel to support multiple qualities of service. By supporting multiple qualities of service with a single IPsec tunnel, the 3GPP network can avoid signaling and computation overhead attendant to establishing multiple IPsec tunnels.

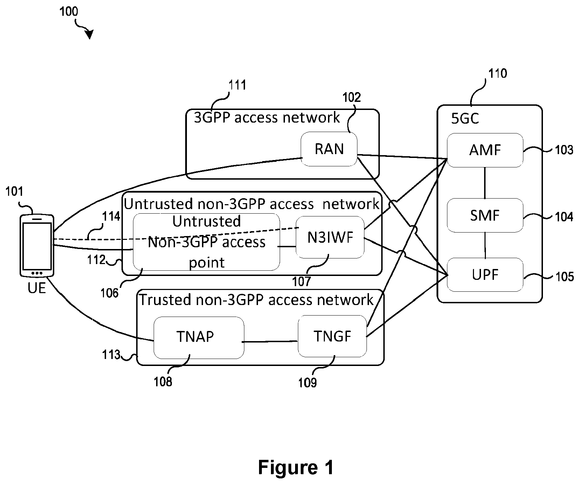

**Figure 1** shows a pictorial diagram illustrating possible connections of a UE to a 5GC via different types of access networks in a wireless communication system. A UE 101 can connect to a 5GC 110 via a 3GPP access network 111. The 3GPP access network 111 includes a radio access network (RAN) 102. The RAN 102 provides access for the UE 101 to communicate with other nodes in the wireless communication system, such as the 5GC 110. The RAN (sometimes also referred to as a radio network or access network) might include a number of base stations (BSs) that can support communication for the UE 101 and a number of other UEs. Different types of base stations may be referred to as a NodeB, an LTE evolved NodeB (eNB), a next generation NodeB (gNB), an access point (AP), a radio head, a transmit-receive point (TRP), among other examples, depending on the wireless communication standard that the base station supports. One or more LTE base stations might make up an LTE RAN. The LTE RAN (sometimes also referred to as an LTE network) provides access to the wireless communication system. Similarly, one or more 5G base stations might make up a 5G New Radio (NR) RAN, and may be referred to as a 5G NR network that provides access to the wireless communication system. The LTE network and 5G NR network are two examples of a radio access network that can be used to communicate to the 5GC 110.

The UE 101 can also connect to a 5GC 110 via the trusted non-3GPP access network 113. The trusted non-3GPP access network 113 includes a Trusted Non-3GPP access point (TNAP) (such as a private WiFi access point) and a trusted non-3GPP gateway function (TNGF) 109.

Additionally, the UE 101 can connect to a 5GC 110 via an untrusted non-3GPP access network 112. The untrusted non-3GPP access network 112 includes at least one untrusted non-3GPP access point 106 and a non-3GPP Inter-Working Function (N3IWF) 107. The untrusted non-3GPP access point 106 can include any suitable WiFi access point, such as a public WiFi access point. The N3IWF 107 connects the untrusted non-3GPP access point 106 to access an access mobility function (AMF) 103 and a user plane function (UPF) 105 of the 5GC 110. As UE 101 connects to the 5GC 110 via the untrusted non-3GPP access network 112, the 5GC 110 establishes an Internet Protocol security (IPsec) tunnel 114 between the N3IWF 107 and the UE 101. The UE 101 and N3IWF 107 can transmit datagrams via the IPsec tunnel 114. In some implementations, each datagram in the IPsec tunnel 114 can have QoS. For example, a datagram including streaming video data has one QoS, whereas another datagram including instant messaging data has a different QoS.

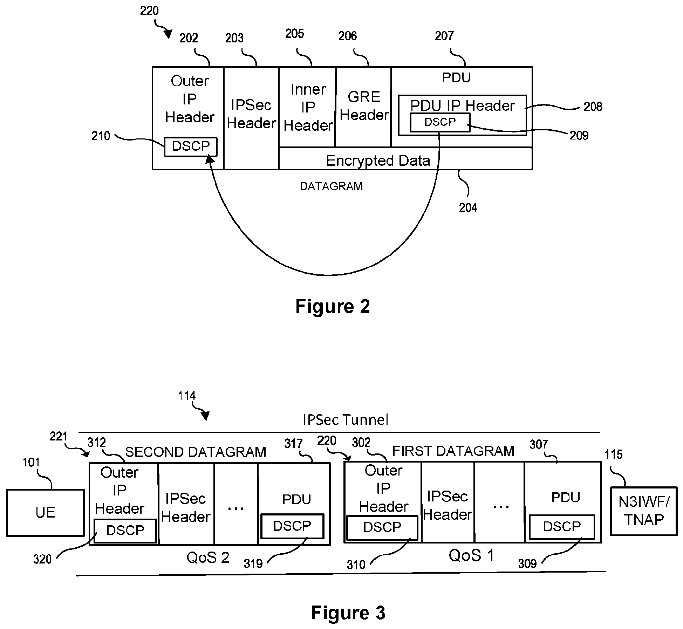

**Figure 2** is a pictural diagram illustrating a datagram structure. In some implementations, a datagram 220 includes an outer IP header 202 indicating a source IP address (such as an IP address of the UE 101) and a destination IP address (such as an IP address of the N3IWF 107). The outer IP header 202 is not encrypted. The outer IP header 202 includes a first DSCP value 210. The datagram 220 also includes an IPsec header 203 that encapsulates encrypted data 204 of an IPsec packet. The encrypted data 204 includes an inner IP header 205 (encrypted), a generic routing encapsulation (GRE) header 206 (encrypted), and a PDU 207 (encrypted). The PDU 207 includes a PDU IP header 208 which includes a second DSCP value 209 (encrypted). The second DSCP value 209 indicates a QoS for the PDU 207. When creating the datagram 220, some implementations of the UE 101 or the N3IWF 107 copy an unencrypted version of the second DSCP value 209 into the outer IP header 202. As a result, the outer IP header 202 includes a first DSCP value 210 matching the second DSCP value 209. As noted, the first DSCP value 210 in the outer IP header 202 is not encrypted. The untrusted non-3GPP access network 112 provides a QoS for the datagram 220 according to the first DSCP value 210 in the outer IP header 202.

**Figure 3** is a pictorial diagram illustrating transmittal of datagrams with different QoSs via an IPsec tunnel between a UE and N3IWF. In Figure 3, the N3IWF/TNGF 115 establishes the IPsec tunnel 114 with the UE 101. After establishing the IPsec tunnel 114, the UE 101 and the N3IWF/TNGF 115 can transmit and receive datagrams over the IPsec tunnel 114. In the IPsec tunnel 114, each datagram might indicate a different QoS.

In some implementations, the UE 101 transmits multiple datagrams over the IPsec tunnel 114, where each datagram indicates a different QoS. For example, the UE 101 generates and transmits a first datagram 220 to the N3IWF/TNGF 115. The first datagram 220 includes an outer IP header 302 which includes a first DSCP value 310 matching a second DSCP value 309 of a first PDU 307 encrypted in the first datagram 220. Because the first and second DSCP values match, a QoS of the first datagram 220 matches a QoS of the first PDU 307.

Continuing the example, the UE 101 also generates and transmits a second datagram 221. The second datagram 221 includes an outer IP header 312 which includes a third DSCP value 320 matching a fourth DSCP value 319 of a second PDU 317 encrypted in the second datagram 221. Because the third and fourth DSCP values match, a QoS of the second datagram 221 matches a QoS of the second PDU 317.

As another example, the N3IWF/TNGF 115 generates and transmits the first datagram 220 and the second datagram 221, as similarly described with reference to the UE 101 of Figure 3. Therefore, both the UE 101 and the N3IWF/TNGF 115 can transmit multiple datagrams over a single IPsec tunnel 114, where each datagram indicates a different QoS.

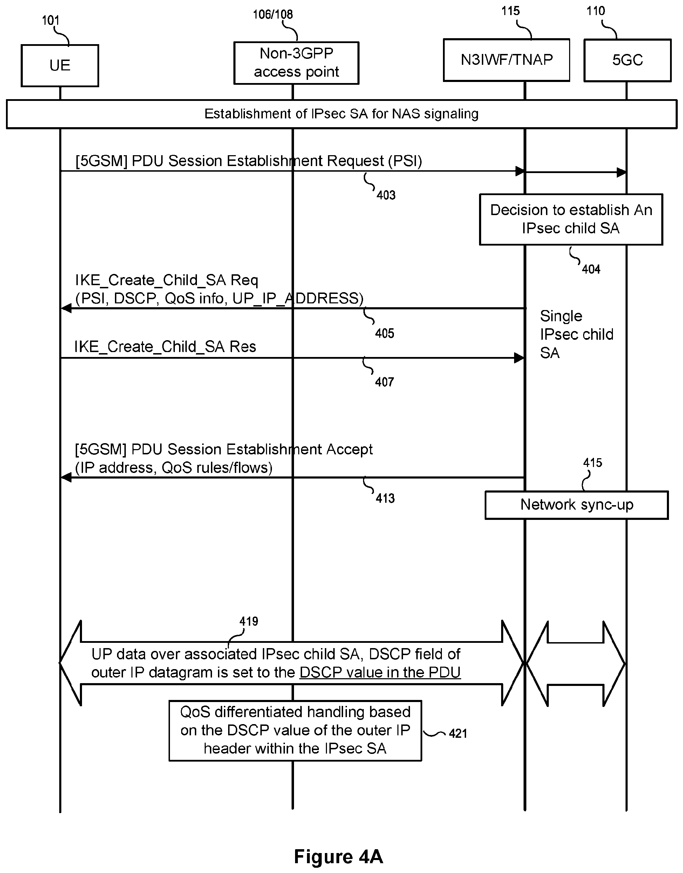

**Figure 4A** is a signaling diagram illustrating messaging and operations for establishing a single IPsec child SA between an N3IWF/TNGF and a UE. In some implementations, the 5GC 110 establishes the IPsec child SA when registering the UE 101 as specified in TS 23.502 sub-clause 4.12.2. The IPsec child SA establishes an IPsec tunnel by indicating shared security attributes between the UE 101 and the N3IWF/TNGF 115, such as cryptographic algorithm and mode, encryption key(s), and other network traffic parameters. At 403, the UE 101 transmits a PDU session establishment request to the 5GC 110 via the N3IWF 107. At 404, the 5GC 110 responds to the PDU session establishment request with a decision to establish an IPsec child SA with the UE 101. Also, the 5GC 110 transmits a message instructing the N3IWF/TNGF 115 to establish a GRE tunnel for each QoS flow in the PDU session and to establish an IPsec SA with the UE 101.

At 405, the N3IWF 107 transmits to the UE 101 a request to create the child IPsec SA. In some implementations, the request includes a PDU session identifier (PSI) for the IPsec SA, DSCP, QoS Flow identifiers (QFIs) for the IPsec SA, a DSCP value for the IPsec SA, a Default IPsec child SA indication, and additional QoS information.

At 407, the UE 101 responds by transmitting an IPsec SA response that establishes an IPsec tunnel between the UE 101 and the N3IWF/TNGF 115. After the IPsec tunnel has been established, the N3IWF 107 transmits a PDU session accept message to the UE 101 (at 413). The PDU session establishment accept message can include an IP address of the N3IWF/TNGF 115, QOS rules, and/or QOS flows.

At 415, the 5GC 110 and N3IWF 107 synchronize the PDU session status.

After establishing the single IPsec child SA, the UE 101 and the N3IWF 107 can transmit datagrams 220 via the single IPsec child SA. In some implementations, each datagram 220 includes an outer IP header 202 which includes a first DSCP value 210 matching a second encrypted DSCP value 209 of a PDU 207, where the PDU 207 is included in the datagram 220. As noted, the DSCP value 210 in the outer IP header 202 indicates a QoS for the datagram 220.

At 421, the non-3GPP access point 106/108 provides a QoS to each datagram 220 of the IPsec child SA based on the DSCP value 210 in the outer IP header 202. Therefore, the untrusted non-3GPP access network can perform QoS differentiation based on different DSCP values for a single IPsec tunnel.

In some implementations, the 5GC 110 establishes two or more IPsec child SAs, where each IPsec child SA has a particular QoS. For example, to accommodate two qualities of service, the 5GC 110 can create a first IPsec child SA for a first QoS and a second IPsec child SA for a second QoS.

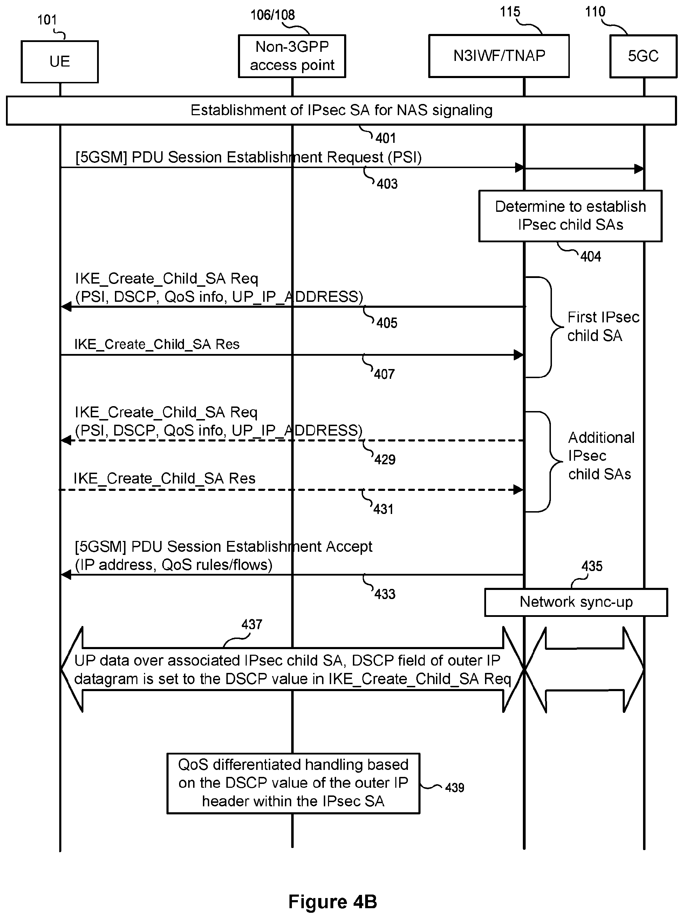

**Figure 4B** is a signaling diagram illustrating messaging and operations for establishing multiple IPsec child SAs between an N3IWF and a UE. Figure 4B shows a scenario in which a UE uses non-3GPP access absent the features of this disclosure. In Figure 4B, the network components 101-110 are identical to those described with reference to Figure 4A. Also, the messaging and operations 401-407 are identical to those described with reference to Figure 4A. At 405 and 407, the N3IWF/TNGF 115 and UE 101 establish the first IPsec child SA. At 429 and 431, the N3IWF 107 and UE 101 establish a second IPsec child SA. Although Figure 4B shows two IPsec child SAs, the N3IWF/TNGF 115 and UE 101 can establish any suitable number of IPsec child SAs to accommodate any number of qualities of service.

At 433, the N3IWF/TNGF 115 transmits a PDU session accept message to the UE 101. At 435, the 5GC 110 and N3IWF/TNGF 115 synchronize the PDU session status. At this point, the UE 101 and N3IWF/TNGF 115 have established two IPsec tunnels.

At 437, the N3IWF/TNGF 115 and UE 101 transmit datagrams 220 over the IPsec child SAs. As noted, each IPsec child SA supports a particular QoS. Therefore, all datagrams of a particular IPsec child SA indicate the same QoS. To indicate a QoS in a datagram 220, the transmitter (N3IWF/TNGF 115 or UE 101) determines the DSCP value that was included in the IPsec child SA request (see blocks 405 and 429). Next, the transmitter generates a datagram 220 having an outer IP header 202 which matches the DSCP value that was included in the IPsec child SA request (such as the request at 405). All datagrams of a particular IPsec child SA include the same DSCP value in the outer header and therefore receive the same QoS.

At 439, the non-3GPP access point 106/108 provides a QoS to each datagram 220 based on the DSCP value 210 in the outer IP header 202 within the IPsec SA. Therefore, the untrusted non-3GPP access network 112 can perform QoS differentiation between IPsec child SAs.

In some implementations, the 5GC 110 chooses between a single IPsec tunnel and multiple IPsec tunnels. When using a single IPsec tunnel, the single IPsec tunnel supports multiple qualities of service. When using multiple IPsec tunnels, each IPsec tunnel supports a different QoS.

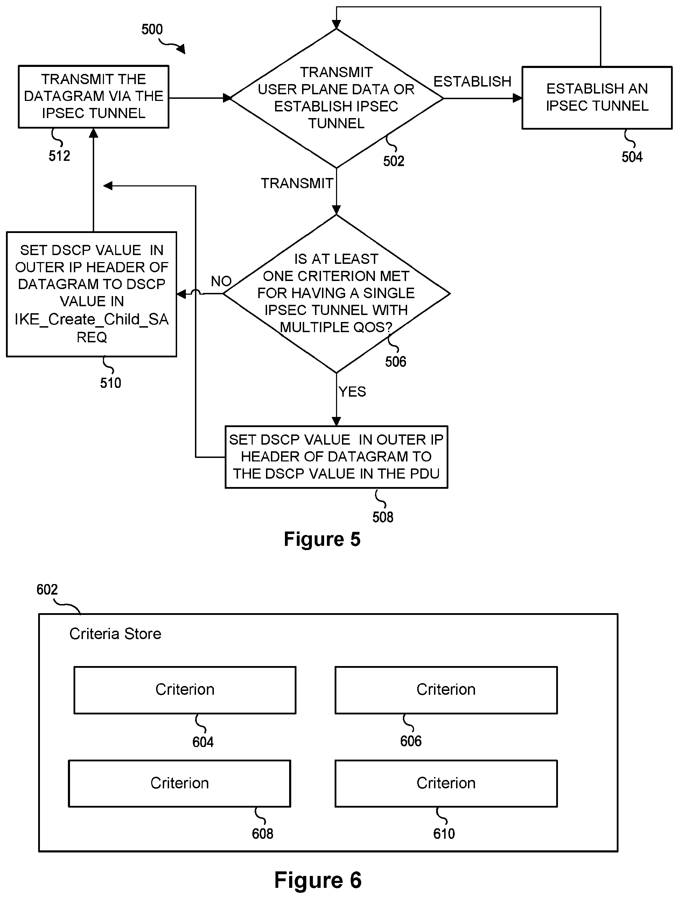

**Figure 5** is a flowchart illustrating operations for a UE or N3IWF transmitting datagrams using a single IPsec tunnel or multiple IPsec tunnels. At block 502, a transmitter (UE 101 or N3IWF/TNGF 115) chooses to transmit user plane data or to establish an IPsec tunnel. If the transmitter chooses to establish an IPsec tunnel, flow continues at block 504. On the first pass through the flowchart 500, the transmitter will choose to establish an IPsec tunnel. If the transmitter chooses to transmit user plane data (such as datagrams 220), flow continues at block 506.

At block 504, the transmitter establishes an IPsec tunnel between the UE 101 and the N3IWF/TNGF 115. On the first pass through the flowchart 500, there is only a single IPsec tunnel. That is, there is a single IPsec child SA for a PDU session. Flow continues at block 502.

At block 506, the transmitter determines whether at least one criterion has been met for having a single IPsec tunnel that supports multiple qualities of service. When the transmitter is the N3IWF 107, criteria for having a single IPsec tunnel include: the untrusted non-3GPP access network has not provided any DSCP value for the IPsec child SA in the IPsec child SA request (see 405 or 429). When the transmitter is the N3IWF/TNGF 115, the criteria also include: the untrusted non-3GPP access network has provided a DSCP value equal to zero in the IPsec child SA request (see 405 or 429). When the transmitter is the UE 101, criteria for having a single IPsec tunnel include: there is only a single IPsec tunnel between the UE 101 and the N3IWF/TNGF 115, a UE configuration setting indicates that an IPsec differential services feature is enabled, and a user configuration setting indicates that an IPsec differential services feature is enabled.

If at least one criterion has been met, flow continues at block 508. Otherwise, flow continues at block 510.

At block 508, the transmitter sets a first DSCP value 210 in an outer IP header 202 of a datagram 222 to a second DSCP value 209 in a PDU 207. Flow continues at block 512.

At block 510, the transmitter sets a DSCP value 210 in the outer IP header 202 of a datagram 220 to the DSC P value received in the IPsec tunnel request. Flow continues at block 512.

At block 512, the transmitter transmits the datagram 220 via the IPsec tunnel. Flow might continue at block 502 or end after block 512.

**Figure 6** is a pictorial diagram illustrating criteria by which a UE or N3IWF can decide whether to utilize a single IPsec tunnel or multiple IPsec tunnels. The criteria may be stored in a criteria store 602. The criteria store 602 includes a plurality of criteria 604-610. Each criterion may be specifically relevant to a particular transmitter. For example, the criterion 604 may be relevant to the UE 101, but not to the N3IWF/TNGF 115. However, a criterion may be relevant to both the user equipment and the UE 101 and the N3IWF/TNGF 115. When the transmitter is the N3IWF/TNGF 115, the criteria 604-610 for having a single IPsec tunnel can include: the untrusted non-3GPP access network has not provided any DSCP value for the IPsec child SA in the IPsec child SA request (see 405 or 429). When the transmitter is the N3IWF 107, the criteria 604-610 can also include: the untrusted non-3GPP access network has provided a DSCP value equal to zero in the IPsec child SA request (see 405 or 429). When the transmitter is the UE 101, criteria 604-610 for having a single IPsec tunnel can include: there is only a single IPsec tunnel between the UE 101 and the N3IWF/TNGF 115, a UE configuration setting indicates that an IPsec differential QoS feature is enabled, and a user configuration setting indicates that an IPsec differential QoS feature is enabled.

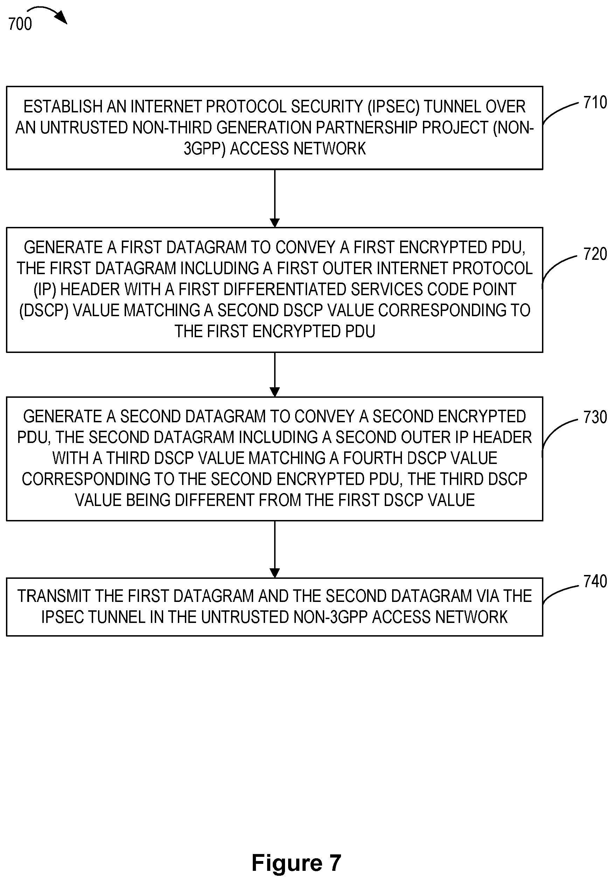

**Figure 7** shows a flowchart of an example process 700 for QoS differentiation for non-3GPP access. In some implementations, one or more process blocks of Figure 7 might be performed by an apparatus, such as a UE, a N3IWF, or a TNGF, such as any of the UE 101, the N3IWF 107, or the TNGF 109 described with reference to Figures 1, 4A, and 4B.

At block 710, the apparatus establishes an Internet Protocol security (IPsec) tunnel over an untrusted non-third generation partnership project (non-3GPP) access network. At block 720, the apparatus generates a first datagram to convey a first encrypted PDU. The first datagram includes a first outer Internet Protocol (IP) header with a first differentiated services code point (DSCP) value matching a second DSCP value corresponding to the first encrypted PDU. At block 730, the apparatus generates a second datagram to convey a second encrypted PDU. The second datagram includes a second outer IP header with a third DSCP value matching a fourth DSCP value corresponding to the second encrypted PDU. The first DSCP value is different from the third DSCP value. At block 740, the apparatus transmits the first datagram and the second datagram via the IPsec tunnel in the untrusted non-3GPP access network.

Although the Figures show example blocks of processes, in some implementations, the processes might include additional blocks, fewer blocks, different blocks, or differently arranged blocks than those depicted in the drawings. Additionally, or alternatively, two or more of the blocks of processes might be performed in parallel.

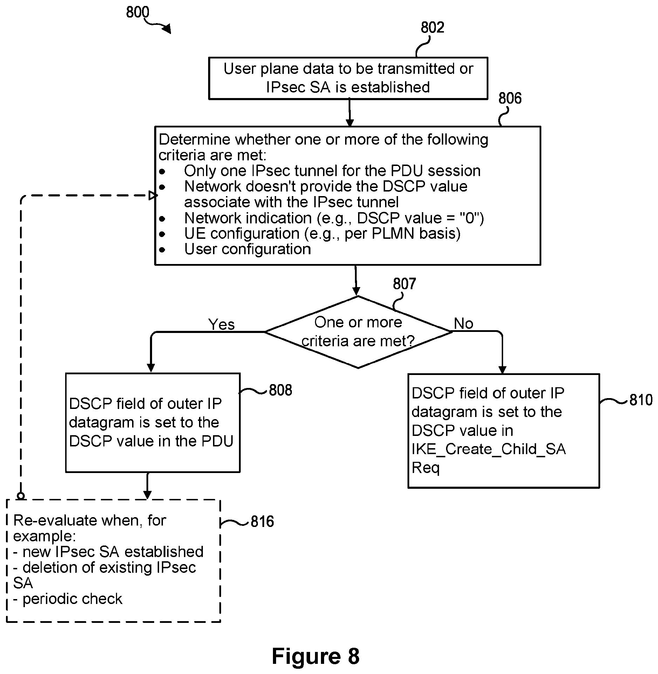

**Figure 8** is a flowchart illustrating operations for a transmitter transmitting datagrams using a single IPsec tunnel or multiple IPsec tunnels. In some implementations, one or more process blocks of Figure 8 might be performed by an apparatus, such as a UE, a N3IWF, or a TNGF, such as any of the UE 101, the N3IWF 107, or the TNGF 109 described with reference to Figures 1, 4A, and 4B. At block 802, the apparatus (such as a UE 101 or N3IWF/TNGF 115) determines that user plane data is available to be transmitted and/or that the apparatus will establish an IPsec tunnel SA. At block 806, the apparatus considers one or more of the following criteria: there is only one IPsec tunnel for the PDU session, the network did not provide a DSCP value for the IPsec tunnel, the network indicated that the DSCP value for the IPsec tunnel is zero, a UE configuration indicates an IPsec QoS differential feature is enabled (such as on a Public Land Mobile Network basis), a user configuration indicates an IPsec QoS differential feature is enabled.

At block 807, the apparatus determines whether one or more of the criteria are met. If one or more of the criteria are met, the flow continues at block 808. Otherwise, the flow continues at block 810.

At block 808, the apparatus sets the DSCP value of the outer IP header of the datagram to the DSCP value of a PDU. In some implementations, at block 816, when one or more of the following example conditions are met, the apparatus reevaluates which DSCP value will be placed into the outer IP header of the datagram: a new IPsec SA is established, deletion of an existing IPsec SA, and a periodic time period has elapsed.

At block 810, the apparatus sets a DSCP value of an outer IP header of a datagram to a DSCP value in an IPsec tunnel request 405 rather than the DSCP value of the PDU.

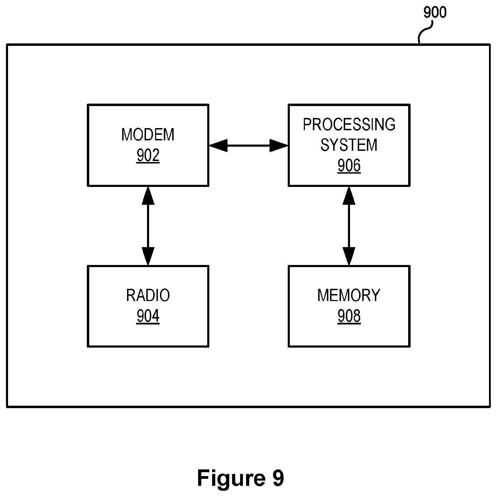

**Figure 9** shows a block diagram of an example device 900 that supports QoS differentiation for non-3GPP access. In some implementations, the device 900 can be an example of a device for use in a UE, such as the UE 101 described above with reference to Figures 1-8. The device 900 is capable of transmitting (or outputting for transmission) and receiving wireless communications. In some implementations, the device 900 is an example of a N3IWF 107 and a TNGF 109.

The device 900 can be, or can include, a chip, system on chip (SoC), chipset, package or device. The term "system-on-chip" (SoC) is used herein to refer to a set of interconnected electronic circuits typically, but not exclusively, including one or more processors, a memory, and a communication interface. The SoC might include a variety of different types of processors and processor cores, such as a general purpose processor, a central processing unit (CPU), a digital signal processor (DSP), a graphics processing unit (GPU), an accelerated processing unit (APU), a sub-system processor, an auxiliary processor, a single-core processor, and a multicore processor. The SoC might further include other hardware and hardware combinations, such as a field programmable gate array (FPGA), a configuration and status register (CSR), an application-specific integrated circuit (ASIC), other programmable logic device, discrete gate logic, transistor logic, registers, performance monitoring hardware, watchdog hardware, counters, and time references. SoCs might be integrated circuits (ICs) configured such that the components of the IC reside on the same substrate, such as a single piece of semiconductor material (such as, for example, silicon).

The term "system in a package" (SIP) is used herein to refer to a single module or package that might contain multiple resources, computational units, cores or processors on two or more IC chips, substrates, or SoCs. For example, a SIP might include a single substrate on which multiple IC chips or semiconductor dies are stacked in a vertical configuration. Similarly, the SIP might include one or more multi-chip modules (MCMs) on which multiple ICs or semiconductor dies are packaged into a unifying substrate. A SIP also might include multiple independent SoCs coupled together via high speed communication circuitry and packaged in close proximity, such as on a single motherboard or in a single mobile communication device. The proximity of the SoCs facilitates high speed communications and the sharing of memory and resources.

The term "multicore processor" is used herein to refer to a single IC chip or chip package that contains two or more independent processing cores (for example a CPU core, IP core, GPU core, among other examples) configured to read and execute program instructions. A SoC might include multiple multicore processors, and each processor in an SoC might be referred to as a core. The term "multiprocessor" may be used herein to refer to a system or device that includes two or more processing units configured to read and execute program instructions.

The device 900 might include one or more modems 902. In some implementations, the one or more modems 902 (collectively "the modem 902") might include a WWAN modem (for example, a 3GPP 4G LTE or 5G compliant modem). In some implementations, the device 900 also includes one or more radios (collectively "the radio 904"). In some implementations, the device 900 further includes one or more processors, processing blocks or processing elements (collectively "the processing system 906") and one or more memory blocks or elements (collectively "the memory 908"). In some implementations, the processing system 906 can include the memory 908.

The modem 902 can include an intelligent hardware block or device such as, for example, an application-specific integrated circuit (ASIC) among other possibilities. The modem 902 is generally configured to implement a PHY layer. For example, the modem 902 is configured to modulate packets and to output the modulated packets to the radio 904 for transmission over the wireless medium. The modem 902 is similarly configured to obtain modulated packets received by the radio 904 and to demodulate the packets to provide demodulated packets. In addition to a modulator and a demodulator, the modem 902 might further include digital signal processing (DSP) circuitry, automatic gain control (AGC), a coder, a decoder, a multiplexer and a demultiplexer. For example, while in a transmission mode, data obtained from the processing system 906 is provided to a coder, which encodes the data to provide encoded bits. The encoded bits are mapped to points in a modulation constellation (using a selected MCS) to provide modulated symbols. The modulated symbols might be mapped to a number NSS of spatial streams or a number NSTS of space-time streams. The modulated symbols in the respective spatial or space-time streams might be multiplexed, transformed via an inverse fast Fourier transform (IFFT) block, and subsequently provided to the DSP circuitry for Tx windowing and filtering. The digital signals might be provided to a digital-to-analog converter (DAC). The resultant analog signals might be provided to a frequency upconverter, and ultimately, the radio 904. In implementations involving beamforming, the modulated symbols in the respective spatial streams are precoded via a steering matrix prior to their provision to the IFFT block.

While in a reception mode, digital signals received from the radio 904 are provided to the DSP circuitry, which is configured to acquire a received signal, for example, by detecting the presence of the signal and estimating the initial timing and frequency offsets. The DSP circuitry is further configured to digitally condition the digital signals, for example, using channel (narrowband) filtering, analog impairment conditioning (such as correcting for I/Q imbalance), and applying digital gain to ultimately obtain a narrowband signal. The output of the DSP circuitry might be fed to the AGC, which is configured to use information extracted from the digital signals, for example, in one or more received training fields, to determine an appropriate gain. The output of the DSP circuitry also is coupled with the demodulator, which is configured to extract modulated symbols from the signal and, for example, compute the logarithm likelihood ratios (LLRs) for each bit position of each subcarrier in each spatial stream. The demodulator is coupled with the decoder, which might be configured to process the LLRs to provide decoded bits. The decoded bits from all of the spatial streams are fed to the demultiplexer for demultiplexing. The demultiplexed bits might be descrambled and provided to the MAC layer (the processing system 906) for processing, evaluation, or interpretation.

The radio 904 generally includes at least one radio frequency (RF) transmitter (or "transmitter chain") and at least one RF receiver (or "receiver chain"), which might be combined into one or more transceivers. For example, the RF transmitters and receivers might include various DSP circuitry including at least one power amplifier (PA) and at least one low-noise amplifier (LNA), respectively. The RF transmitters and receivers might, in turn, be coupled to one or more antennas. For example, in some implementations, the device 900 can include, or be coupled with, multiple transmit antennas (each with a corresponding transmit chain) and multiple receive antennas (each with a corresponding receive chain). The symbols output from the modem 902 are provided to the radio 904, which transmits the symbols via the coupled antennas. Similarly, symbols received via the antennas are obtained by the radio 904, which provides the symbols to the modem 902.

The processing system 906 can include an intelligent hardware block or device such as, for example, a processing core, a processing block, a central processing unit (CPU), a microprocessor, a microcontroller, a digital signal processor (DSP), an application-specific integrated circuit (ASIC), a programmable logic device (PLD) such as a field programmable gate array (FPGA), discrete gate or transistor logic, discrete hardware components, or any combination thereof designed to perform the functions described herein. The processing system 906 processes information received through the radio 904 and the modem 902, and processes information to be output through the modem 902 and the radio 904 for transmission through the wireless medium. In some implementations, the processing system 906 might generally control the modem 902 to cause the modem to perform various operations described herein. For example, the processing system 906, in conjunction with the modem 902, may implement any of the features described with reference to Figures 2-6.

The memory 908 can include tangible storage media such as random-access memory (RAM) or read-only memory (ROM), or combinations thereof. The memory 908 also can store non-transitory processor- or computer-executable software (SW) code containing instructions that, when executed by the processing system 906, cause the processor to perform various operations described herein for wireless communication, including the generation, transmission, reception and interpretation of MPDUs, frames or packets. For example, various functions of components disclosed herein, or various blocks or steps of a method, operation, process or algorithm disclosed herein, can be implemented as one or more modules of one or more computer programs.

Figures 1-9 and the operations described herein are examples meant to aid in understanding example implementations and should not be used to limit the potential implementations or limit the scope of the claims. Some implementations may perform additional operations, fewer operations, operations in parallel or in a different order, and some operations differently.

The foregoing disclosure provides illustration and description but is not intended to be exhaustive or to limit the aspects to the precise form disclosed. Modifications and variations may be made in light of the above disclosure or may be acquired from practice of the aspects. While the aspects of the disclosure have been described in terms of various examples, any combination of aspects from any of the examples is also within the scope of the disclosure. The examples in this disclosure are provided for pedagogical purposes.

Another innovative aspect of the subject matter described in this disclosure can be implemented as a wireless communication device of a UE. The wireless communication device may include at least one interface and a processing system communicatively coupled with the at least one interface. The processing system may be configured to implement any one of the above clauses.

Another innovative aspect of the subject matter described in this disclosure can be implemented as a portable electronic device comprising a wireless communication device, a plurality of antennas coupled to the at least one transceiver to wirelessly transmit signals output from the at least one transceiver and a housing that encompasses the wireless communication device, the at least one transceiver and at least a portion of the plurality of antennas. The wireless communication device may include at least one interface and a processing system communicatively coupled with the at least one interface. The processing system may be configured to implement any one of the above clauses.

Another innovative aspect of the subject matter described in this disclosure can be implemented as a machine-readable medium having processor-readable instructions stored therein that, when executed by a processing system of a UE, cause the UE to implement any one of the above clauses.

Another innovative aspect of the subject matter described in this disclosure can be implemented as an apparatus. The apparatus may include means for implementing any one of the above clauses.

As used herein, the term "component" is intended to be broadly construed as hardware, firmware, or a combination of hardware and software. As used herein, a processor is implemented in hardware, firmware, or a combination of hardware and software. As used herein, the phrase "based on" is intended to be broadly construed to mean "based at least in part on."

Some aspects are described herein in connection with thresholds. As used herein, satisfying a threshold may refer to a value being greater than the threshold, greater than or equal to the threshold, less than the threshold, less than or equal to the threshold, equal to the threshold, not equal to the threshold, or the like.

As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

In this disclosure, the term "can" indicates a capability, or alternatively indicates a possible implementation option. The term "may" indicates a permission, or alternatively indicates a possible implementation option. The term "might" indicates a possible utilization of an implementation option.

The various illustrative components, logic, logical blocks, modules, circuits, operations and algorithm processes described in connection with the implementations disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

The hardware and data processing apparatus used to implement the various illustrative components, logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination of computing devices, for example, a combination of a DSP and a microprocessor, multiple microprocessors, one or more microprocessors in conjunction with a DSP core, or any other such configuration. In some implementations, particular processes, operations and methods may be performed by circuitry that is specific to a given function.

As described above, in some aspects implementations of the subject matter described in this specification can be implemented as software. For example, various functions of components disclosed herein, or various blocks or steps of a method, operation, process or algorithm disclosed herein can be implemented as one or more modules of one or more computer programs. Such computer programs can include non-transitory processor- or computer-executable instructions encoded on one or more tangible processor- or computer-readable storage media for execution by, or to control the operation of, data processing apparatus including the components of the devices described herein. By way of example, and not limitation, such storage media may include RAM, ROM, EEPROM, CD-ROM or other optical disk storage, magnetic disk storage or other magnetic storage devices, or any other medium that may be used to store program code in the form of instructions or data structures. Combinations of the above should also be included within the scope of storage media.

As used herein, the terms "user equipment", "wireless communication device", "mobile communication device", "communication device", or "mobile device" refer to any one or all of cellular telephones, smartphones, portable computing devices, personal or mobile multimedia players, laptop computers, tablet computers, smartbooks, Internet-of-Things (IoT) devices, palm-top computers, wireless electronic mail receivers, multimedia Internet enabled cellular telephones, wireless gaming controllers, display sub-systems, driver assistance systems, vehicle controllers, vehicle system controllers, vehicle communication system, infotainment systems, vehicle telematics systems or subsystems, vehicle display systems or subsystems, vehicle data controllers or routers, and similar electronic devices which include a programmable processor and memory and circuitry configured to perform operations as described herein.

As used herein, the terms "SIM," "SIM card," and "subscriber identification module" are used interchangeably to refer to a memory that may be an integrated circuit or embedded into a removable card, and that stores an International Mobile Subscriber Identity (IMSI), related key, or other information used to identify or authenticate a mobile communication device on a network and enable a communication service with the network. Because the information stored in a SIM enables the mobile communication device to establish a communication link for a particular communication service with a particular network, the term "subscription" is used herein as a shorthand reference to refer to the communication service associated with and enabled by the information stored in a particular SIM as the SIM and the communication network, as well as the services and subscriptions supported by that network, correlate to one another. A SIM used in various examples may contain user account information, an international mobile subscriber identity (IMSI), a set of SIM application toolkit (SAT) commands, and storage space for phone book contacts. A SIM card may further store home identifiers (such as, a System Identification Number (SID)/Network Identification Number (NID) pair, a Home Public Land Mobile Number (HPLMN) code, among other examples) to indicate the SIM card network operator provider. An Integrated Circuit Card Identity (ICCID) SIM serial number may be printed on the SIM card for identification. However, a SIM may be implemented within a portion of memory of the mobile communication device, and thus need not be a separate or removable circuit, chip or card.

Various modifications to the implementations described in this disclosure may be readily apparent to persons having ordinary skill in the art, and the generic principles defined herein may be applied to other implementations without departing from the scope of the appended claims. Thus, the claims are not intended to be limited to the implementations shown herein but are to be accorded the widest scope consistent with this disclosure, the principles and the novel features disclosed herein.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

## Claims

1. A method for generating datagrams of a protocol data unit, PDU, session between a user equipment, UE, (101) and a fifth-generation core network, 5GC, (110) the method comprising:
establishing an Internet Protocol security, IPsec, tunnel over a non-third generation partnership project, non-3GPP, access network;
generating a first datagram to convey a first encrypted PDU, the first datagram including a first outer Internet Protocol, IP, header and an IPsec header that encapsulates an encrypted payload, the encrypted payload including: a first inner IP header, a generic routing encapsulation, GRE, header, and the first encrypted PDU;
setting a first differentiated services code point, DSCP, value of the first outer IP header to match a second DSCP value of the first encrypted PDU; and
transmitting the first datagram via the IPsec tunnel in the non-3GPP access network.

2. The method of claim 1, wherein the setting the first DSCP value includes assigning the first DSCP value to match the second DSCP value is responsive to determining that the non-3GPP access network has not provided any DSCP value for the IPsec tunnel.

3. The method of any one of claims 1-2, wherein the first DSCP value indicates a first quality of service, QoS, for a first data flow between the UE and the 5GC.

4. The method of any one of claims 1-3, wherein the IPsec tunnel is identified by a child security association, SA, of an IPsec SA created for the PDU session.

5. The method of any one of claims 1-4, wherein the first datagram is transmitted or received by a non-3GPP Inter-Working Function, N3IWF, of the non-3GPP access network or a Trusted Non-3GPP Gateway Function, TNGF, of the non-3GPP access network.

6. The method of any one of claims 1-5, wherein the setting the first DSCP value includes verifying that at least one criterion is met, wherein the at least one criterion includes at least one of:
the IPsec tunnel is the only IPsec tunnel between the UE and the non-3GPP access network for the PDU session,
the non-3GPP access network has not provided any DSCP value for the IPsec tunnel,
the non-3GPP access network has provided a DSCP value equal to zero for the IPsec tunnel,
the UE is configured to transmit a plurality of encrypted PDUs having different QoSs via the IPsec tunnel, or
a user profile enables the UE to transmit the plurality of encrypted PDUs having different QoSs via the IPsec tunnel.

7. The method of any of claims 1-6, further comprising:
generating a second datagram to convey a second encrypted PDU, the second datagram including a second outer IP header with a third DSCP value matching a fourth DSCP value corresponding to the second encrypted PDU, the first DSCP value being different from the third DSCP value; and
transmitting the second datagram via the IPsec tunnel in the non-3GPP access network such that same IPsec tunnel carries both the first datagram and the second datagram with QoS differentiation based on the first DSCP value and the third DSCP value.

8. A method for communicating datagrams of a protocol data unit, PDU, session between a user equipment, UE, (101) and a fifth-generation core network, 5GC, (110) via a non-third generation partnership project, non-3GPP, access network, the method comprising:
transmitting a first datagram of data related to the PDU session via an IPsec tunnel over the non-3GPP access network according to a first quality of service, QoS, based on a first differentiated services code point, DSCP,
value in a first outer Internet Protocol, IP, header of the first datagram,
the first datagram including the first outer IP header and a first IPsec header that encapsulates a first encrypted payload, the first encrypted payload including: a first inner IP header, a first generic routing encapsulation, GRE, header, and a first encrypted PDU, the first DSCP value matching a second DSCP value of the first encrypted PDU; and
upon receiving a request to transmit data related to the PDU session according to a second QoS different from the first QoS and determining at least one criterion is met:
transmitting a second datagram of data via the IPsec tunnel according to the second QoS by inserting a third DSCP value in a second outer IP header of the second datagram, the second datagram including the second outer IP header and a second IPsec header that encapsulates a second encrypted payload, the second encrypted payload including: a second inner IP header, a second GRE header, and a second encrypted PDU, the third DSCP value matching a fourth DSCP value of the second encrypted PDU.

9. The method of claim 8, further comprising:
determining that the at least one criterion has been met based on one or more conditions that include:
the non-3GPP access network has not provided any DSCP value for an IPsec child SA in an IPsec child SA request;
the non-3GPP access network enables only one IPsec tunnel for the PDU session;
the non-3GPP access network provides no DSCP value associated with the IPsec tunnel;
the non-3GPP access network associates a pre-determined DSCP value with the IPsec tunnel, the pre-determined DSCP value indicating ability to use the IPsec tunnel for different QoSs;
the UE is configured to transmit the data with different QoSs via a single IPsec tunnel; or
a user profile enables the UE to transmit the data with different QoSs via the IPsec tunnel.

10. The method of claim 9, further comprising:
re-evaluating the one or more conditions when another IPsec tunnel is established, an existing IPsec tunnel is deleted or at a predetermined time interval.

11. An apparatus comprising:
a modem; and
a processor configured to control the modem implement any one of the method claims 1-10.

## Patentansprüche

1. Verfahren zum Erzeugen von Datagrammen einer Protokolldateneinheit-, PDU-, Sitzung zwischen einer Benutzerausrüstung, UE, (101) und einem Kernnetzwerk der fünften Generation, 5GC, (110), wobei das Verfahren umfasst:
Aufbauen eines Internetprotokollsicherheits-, IPsec-, Tunnels über ein Non-Third-Generation-Partnership-Project-, non-3GPP-, Zugangsnetzwerk;
Erzeugen eines ersten Datagramms zum Übermitteln einer ersten verschlüsselten PDU, wobei das erste Datagramm einen ersten äußeren Internetprotokoll-, IP-, Header und einen IPsec-Header, der eine verschlüsselte Nutzlast einkapselt, beinhaltet, wobei die verschlüsselte Nutzlast beinhaltet: einen ersten inneren IP-Header, einen generischen Routing-Einkapselungs-, GRE-, Header und die erste verschlüsselte PDU;
Setzen eines ersten Differentiated-Services-Codepunkt-, DSCP-, Werts des ersten äußeren IP-Headers, um einem zweiten DSCP-Wert der ersten verschlüsselten PDU zu entsprechen; und
Übertragen des ersten Datagramms über den IPsec-Tunnel in dem non-3GPP-Zugangsnetzwerk.

2. Verfahren nach Anspruch 1, wobei das Setzen des ersten DSCP-Werts Zuweisen des ersten DSCP-Werts, um dem zweiten DSCP-Wert zu entsprechen, beinhaltet, das als Reaktion auf Bestimmen erfolgt, dass das non-3GPP-Zugangsnetzwerk keinen DSCP-Wert für den IPsec-Tunnel bereitgestellt hat.

3. Verfahren nach einem der Ansprüche 1-2, wobei der erste DSCP-Wert eine erste Dienstgüte, QoS, für einen ersten Datenfluss zwischen der UE und dem 5GC angibt.

4. Verfahren nach einem der Ansprüche 1-3, wobei der IPsec-Tunnel durch eine untergeordnete Sicherheitsassoziation, SA, einer für die PDU-Sitzung erstellten IPsec-SA identifiziert ist.

5. Verfahren nach einem der Ansprüche 1-4, wobei das erste Datagramm durch eine Non-3GPP-Inter-Working-Funktion, N3IWF, des non-3GPP-Zugangsnetzwerks oder eine Trusted-Non-3GPP-Gateway-Funktion, TNGF, des non-3GPP-Zugangsnetzwerks übertragen oder empfangen wird.

6. Verfahren nach einem der Ansprüche 1-5, wobei das Setzen des ersten DSCP-Werts Verifizieren beinhaltet, dass mindestens ein Kriterium erfüllt ist, wobei das mindestens eine Kriterium mindestens eines von Folgendem beinhaltet:
der IPsec-Tunnel ist der einzige IPsec-Tunnel zwischen der UE und dem non-3GPP-Zugangsnetzwerk für die PDU-Sitzung,
das non-3GPP-Zugangsnetzwerk hat keinen DSCP-Wert für den IPsec-Tunnel bereitgestellt,
das non-3GPP-Zugangsnetzwerk hat einen DSCP-Wert gleich null für den IPsec-Tunnel bereitgestellt,
die UE ist konfiguriert, eine Mehrzahl von verschlüsselten PDUs, die unterschiedliche QoS aufweisen, über den IPsec-Tunnel zu übertragen, oder
ein Benutzerprofil ermöglicht es der UE, die Mehrzahl von verschlüsselten PDUs, die unterschiedliche QoS aufweisen, über den IPsec-Tunnel zu übertragen.

7. Verfahren nach einem der Ansprüche 1-6, ferner umfassend:
Erzeugen eines zweiten Datagramms zum Übermitteln einer zweiten verschlüsselten PDU, wobei das zweite Datagramm einen zweiten äußeren IP-Header mit einem dritten DSCP-Wert, der einem vierten DSCP-Wert entspricht, der zu der zweiten verschlüsselten PDU gehört, beinhaltet, wobei der erste DSCP-Wert sich von dem dritten DSCP-Wert unterscheidet; und
Übertragen des zweiten Datagramms über den IPsec-Tunnel in dem non-3GPP-Zugangsnetzwerk, sodass derselbe IPsec-Tunnel sowohl das erste Datagramm als auch das zweite Datagramm mit QoS-Differenzierung basierend auf dem ersten DSCP-Wert und dem dritten DSCP-Wert trägt.

8. Verfahren zum Kommunizieren von Datagrammen einer Protokolldateneinheit-, PDU-, Sitzung zwischen einer Benutzerausrüstung, UE, (101) und einem Kernnetzwerk der fünften Generation, 5GC, (110) über ein Non-Third-Generation-Partnership-Project-, non-3GPP-, Zugangsnetzwerk, wobei das Verfahren umfasst:
Übertragen eines ersten Datagramms von Daten, die sich auf die PDU-Sitzung beziehen, über einen IPsec-Tunnel über das non-3GPP-Zugangsnetzwerk gemäß einer ersten Dienstgüte, QoS, basierend auf einem ersten Differentiated-Services-Codepunkt-, DSCP-, Wert in einem ersten äußeren Internetprotokoll-, IP-, Header des ersten Datagramms, wobei das erste Datagramm den ersten äußeren IP-Header und einen ersten IPsec-Header, der eine erste verschlüsselte Nutzlast einkapselt, beinhaltet, wobei die erste verschlüsselte Nutzlast beinhaltet: einen ersten inneren IP-Header, einen ersten generischen Routing-Einkapselungs-, GRE-, Header und eine erste verschlüsselte PDU, wobei der erste DSCP-Wert einem zweiten DSCP-Wert der ersten verschlüsselten PDU entspricht; und
bei Empfangen einer Anforderung zum Übertragen von Daten, die sich auf die PDU-Sitzung beziehen, gemäß einer zweiten QoS, die sich von der ersten QoS unterscheidet, und Bestimmen, dass mindestens ein Kriterium erfüllt ist:
Übertragen eines zweiten Datagramms von Daten über den IPsec-Tunnel gemäß der zweiten QoS durch Einfügen eines dritten DSCP-Werts in einen zweiten äußeren IP-Header des zweiten Datagramms, wobei das zweite Datagramm den zweiten äußeren IP-Header und einen zweiten IPsec-Header, der eine zweite verschlüsselte Nutzlast einkapselt, beinhaltet, wobei die zweite verschlüsselte Nutzlast beinhaltet: einen zweiten inneren IP-Header, einen zweiten GRE-Header und eine zweite verschlüsselte PDU, wobei der dritte DSCP-Wert einem vierten DSCP-Wert der zweiten verschlüsselten PDU entspricht.

9. Verfahren nach Anspruch 8, ferner umfassend:
Bestimmen, dass das mindestens eine Kriterium basierend auf einer oder mehreren Bedingungen erfüllt ist, die beinhalten:
das non-3GPP-Zugangsnetzwerk hat keinen DSCP-Wert für eine untergeordnete IPsec-SA in einer Anforderung einer untergeordneten IPsec-SA bereitgestellt;
das non-3GPP-Zugangsnetzwerk ermöglicht nur einen IPsec-Tunnel für die PDU-Sitzung;
das non-3GPP-Zugangsnetzwerk stellt keinen DSCP-Wert bereit, der dem IPsec-Tunnel zugeordnet ist;
das non-3GPP-Zugangsnetzwerk ordnet einen vorbestimmten DSCP-Wert dem IPsec-Tunnel zu, wobei der vorbestimmte DSCP-Wert die Fähigkeit angibt, den IPsec-Tunnel für unterschiedliche QoS zu verwenden;
die UE ist konfiguriert, die Daten mit unterschiedlichen QoS über einen einzelnen IPsec-Tunnel zu übertragen; oder
ein Benutzerprofil ermöglicht es der UE, die Daten mit unterschiedlichen QoS über den IPsec-Tunnel zu übertragen.

10. Verfahren nach Anspruch 9, ferner umfassend:
erneutes Auswerten der einen oder mehreren Bedingungen, wenn ein weiterer IPsec-Tunnel aufgebaut wird, ein bestehender IPsec-Tunnel gelöscht wird oder in einem vorbestimmten Zeitintervall.

11. Einrichtung, umfassend:
ein Modem; und
einen Prozessor, der konfiguriert ist, das Modem zu steuern, um eines der Verfahrensansprüche 1-10 zu implementieren.

## Revendications

1. Procédé de génération de datagrammes d'une session d'unité de données de protocole, PDU, entre un équipement utilisateur, UE, (101) et un réseau central de cinquième génération, 5GC, (110), le procédé comprenant :
la mise en place d'un tunnel de sécurité de protocole Internet, IPsec, sur un réseau d'accès non conforme au projet de partenariat de troisième génération, non-3GPP ;
la génération d'un premier datagramme pour transmettre un premier PDU chiffré, le premier datagramme comportant un premier en-tête de protocole Internet, IP, externe et un en-tête IPsec qui encapsule une charge utile chiffrée, la charge utile chiffrée comportant : un premier en-tête IP interne, un en-tête d'encapsulation de routage générique, GRE, et le premier PDU chiffré ;
la définition d'une première valeur de point de code de services différenciés, DSCP, du premier en-tête IP externe pour correspondre à une deuxième valeur DSCP du premier PDU chiffré ; et
la transmission du premier datagramme via le tunnel IPsec dans le réseau d'accès non-3GPP.

2. Procédé selon la revendication 1, dans lequel la définition de la première valeur DSCP comporte l'attribution de la première valeur DSCP pour correspondre à la deuxième valeur DSCP répond à la détermination que le réseau d'accès non-3GPP n'a fourni aucune valeur DSCP pour le tunnel IPsec.

3. Procédé selon l'une quelconque des revendications 1 et 2, dans lequel la première valeur DSCP indique une première qualité de service, QoS, pour un premier flux de données entre l'UE et le 5GC.

4. Procédé selon l'une quelconque des revendications 1 à 3, dans lequel le tunnel IPsec est identifié par une association de sécurité, SA, enfant d'une SA IPsec créée pour la session PDU.

5. Procédé selon l'une quelconque des revendications 1à 4, dans lequel le premier datagramme est transmis ou reçu par une fonction d'interfonctionnement non-3GPP, N3IWF, du réseau d'accès non-3GPP ou par une fonction de passerelle non-3GPP de confiance, TNGF, du réseau d'accès non-3GPP.

6. Procédé selon l'une quelconque des revendications 1à 5, dans lequel la définition de la première valeur DSCP comporte la vérification qu'au moins un critère est satisfait, dans lequel l'au moins un critère comporte au moins l'un des éléments suivants :
le tunnel IPsec est le seul tunnel IPsec entre l'UE et le réseau d'accès non-3GPP pour la session PDU,
le réseau d'accès non-3GPP n'a fourni aucune valeur DSCP pour le tunnel IPsec,
le réseau d'accès non-3GPP a fourni une valeur DSCP égale à zéro pour le tunnel IPsec,
l'UE est configuré pour transmettre une pluralité de PDU chiffrées ayant différentes QoS via le tunnel IPsec, ou
un profil utilisateur permet à l'UE de transmettre la pluralité de PDU cryptées ayant différentes QoS via le tunnel IPsec.

7. Procédé selon l'une quelconque des revendications 1 à 6, comprenant en outre :
la génération d'un second datagramme pour transmettre un second PDU chiffré, le second datagramme comportant un second en-tête IP externe avec une troisième valeur DSCP correspondant à une quatrième valeur DSCP correspondant au second PDU chiffré, la première valeur DSCP étant différente de la troisième valeur DSCP ; et
la transmission du second datagramme via le tunnel IPsec dans le réseau d'accès non-3GPP de sorte que le même tunnel IPsec transporte à la fois le premier datagramme et le second datagramme avec une différenciation QoS basée sur la première valeur DSCP et la troisième valeur DSCP.

8. Procédé de communication de datagrammes d'une session d'unité de données de protocole, PDU, entre un équipement utilisateur, UE, (101) et un réseau central de cinquième génération, 5GC, (110) via un réseau d'accès non conforme au projet de partenariat de troisième génération, non 3GPP, le procédé comprenant :
la transmission d'un premier datagramme de données relatif à la session PDU via un tunnel IPsec sur le réseau d'accès non-3GPP selon une première qualité de service, QoS, basée sur une première valeur de point de code de services différenciés, DSCP,
dans un premier en-tête de protocole Internet, IP, externe du premier datagramme, le premier datagramme comportant le premier en-tête IP externe et un premier en-tête IPsec encapsulant une première charge utile chiffrée, la première charge utile chiffrée comportant : un premier en-tête IP interne, un premier en-tête d'encapsulation de routage générique, GRE, et une première PDU chiffrée, la première valeur DSCP correspond à une deuxième valeur DSCP de la première PDU chiffrée ; et
lors de la réception d'une demande de transmission de données relatives à la session PDU selon une seconde QoS différente de la première QoS et la détermination qu'au moins un critère est rempli :
la transmission d'un second datagramme de données via le tunnel IPsec selon la seconde QoS en insérant une troisième valeur DSCP dans un second en-tête IP externe du second datagramme, le second datagramme comportant le second en-tête IP externe et un second en-tête IPsec qui encapsule une seconde charge utile chiffrée, la seconde charge utile chiffrée comportant : un second en-tête IP interne, un second en-tête GRE, et un second PDU chiffré, la troisième valeur DSCP correspondant à une quatrième valeur DSCP du second PDU chiffré.

9. Procédé selon la revendication 8, comprenant en outre :
la détermination que l'au moins un critère a été satisfait sur la base d'une ou plusieurs conditions qui comportent :
le réseau d'accès non-3GPP n'a fourni aucune valeur DSCP pour une SA enfant IPsec dans une demande de SA enfant IPsec ;
le réseau d'accès non-3GPP n'autorise qu'un seul tunnel IPsec pour la session PDU ;
le réseau d'accès non-3GPP ne fournit aucune valeur DSCP associée au tunnel IPsec ;
le réseau d'accès non-3GPP associe une valeur DSCP prédéterminée au tunnel IPsec, la valeur DSCP prédéterminée indiquant la capacité d'utiliser le tunnel IPsec pour différentes QoS ;
l'UE est configurée pour transmettre les données avec différentes QoS via un seul tunnel IPsec ; ou
un profil utilisateur permet à l'UE de transmettre les données avec différents QoS via le tunnel IPsec.

10. Procédé selon la revendication 9, comprenant en outre :
la réévaluation des une ou plusieurs conditions lorsqu'un autre tunnel IPsec est établi, qu'un tunnel IPsec existant est supprimé ou à un intervalle de temps prédéterminé.

11. Appareil comprenant :
un modem ; et
un processeur configuré pour commander au modem de mettre en œuvre l'une quelconque des revendications 1 à 10 du procédé.
